# EUROPÄISCHE PATENTSCHRIFT

(11) **EP 0 713 582 B1**
(45) Veröffentlichungstag und Bekanntmachung des Hinweises auf die Patenterteilung: **15.01.1997**
(21) Anmeldenummer: 94922842.3
(22) Anmeldetag: 29.07.1994
(51) Int. Cl.: G02B 6/38

(54) **OPTISCHER STECKVERBINDER UND VERFAHREN ZUM HERSTELLEN EINES OPTISCHEN STECKVERBINDERS**
OPTICAL PIN-AND-SOCKET CONNECTOR AND PROCESS FOR MANUFACTURING OF AN OPTICAL PIN-AND-SOCKET CONNECTOR
CONNECTEUR OPTIQUE A FICHES ET PROCEDE DE FABRICATION D'UN CONNECTEUR OPTIQUE A FICHES

(30) Priorität: 11.08.1993 DE 4327525
(43) Veröffentlichungstag der Anmeldung: 29.05.1996
(73) Patentinhaber: SIEMENS AKTIENGESELLSCHAFT, 80333 München (DE)
(72) Erfinder: KUCHENBECKER, Thomas, D-13597 Berlin (DE); WEISS, Norbert, D-12047 Berlin (DE)
(86) Internationale Anmeldenummer: DE9400905
(87) Internationale Veröffentlichungsnummer: WO9504949

(56) Entgegenhaltungen:
- EP-A- 0 339 876
- US-A- 4 936 662
- US-A- 5 119 455

## Beschreibung

Die Erfindung betrifft einen optischen Steckverbinder mit einem Gehäuse mit einem Hauptteil, in dem ein zwei optische Fasern enthaltendes Kabelende festgelegt ist, und mit einem Frontbereich, in dem zwei Kopplungs-Endstücke mit je einer Axialbohrung zur Aufnahme jeweils eines Faserendes gelagert sind.

Bei bekannten (EP-A1-0 375 168, WO 88/05925 und EP-A1-0 339 876) optischen Steckverbindern der eingangs genannten Art tritt ein Kabelende, das zwei optische Fasern und eine Zugentlastung enthält, in ein Steckverbinder-Gehäuse ein. Ein vom Kabelmantel befreiter Endabschnitt des Kabelendes ist im rückwärtigen Hauptteil des Gehäuses unter Zugentlastung festgelegt. Die freien Fasern erstrecken sich ungeführt bis zu einem Frontbereich des Gehäuses, in dem zwei Kopplungs-Endstücke gelagert sind. Die Kopplungs-Endstücke haben Axialbohrungen zur Aufnahme der Faserenden.
Bei der Herstellung des bekannten Steckverbinders werden in einer Montage-Vorrichtung zunächst die Faserenden in die jeweilige Axialbohrung des Kopplungs-Endstücks eingeführt und darin (z.B. durch Klebung) fixiert. Das Einbringen und Fixieren der Faserenden kann beispielsweise gemäß dem aus der EP-A2-0 327 267 bekannten Verfahren erfolgen. Anschließend wird das dann bereits mit den Kopplungs-Endstücken versehene (vorkonfektionierte) Kabelende der Vorrichtung entnommen und in das Steckverbinder-Gehäuse eingebracht.

Die Herstellung des bekannten Steckverbinders ist verhältnismäßig aufwendig, weil die Faserenden unter Vermeidung von Biege-, Torsions- und/oder Scherbelastungen in einer separaten Vorrichtung zunächst in axiale Flucht mit den Axialbohrungen der Kopplungs-Endstücke gebracht werden müssen. Das Kabelende muß bis zur Vollendung der Fixierung (Aushärten eines zur Klebung verwendeten Epoxydharzes) in der Vorrichtung gehalten werden; in dieser Zeit ist die Vorrichtung blockiert. Die Fertigungs-Taktzeiten erhöhen sich dadurch. Die Herstellung wird zusätzlich dadurch erschwert, daß die Faserenden mit den Kopplungs-Endstücken unter Vermeidung von Faserbelastungen vorsichtig aus der Vorrichtung entnommen und in das Gehäuse des Steckverbinders eingesetzt werden müssen.

Die Aufgabe der Erfindung besteht daher in der Schaffung eines optischen Steckverbinders, der einfach und mit geringem Vorrichtungsaufwand herstellbar ist, wobei die Fasern während der Herstellung weitestgehend vor Belastungen und Beschädigungen geschützt sind.

Diese Aufgabe wird bei einem optischen Steckverbinder der eingangs genannten Art erfindungsgemäß dadurch gelöst,
daß der Frontbereich als separates Frontteil ausgebildet ist,
daß das Hauptteil Führungsmittel aufweist, durch die die optischen Fasern in dem Hauptteil derart angeordnet sind, daß die Faserenden frontteilseitig überstehen und achsparallel in einem dem Abstand der Axialbohrungen entsprechenden Abstand verlaufen,
daß das Frontteil senkrecht zu den Längsachsen der Faserenden relativ zu dem Hauptteil derart verschiebbar und positionierbar ist, daß die Axialbohrungen mit den Längsachsen fluchten, und
daß das Frontteil in ausgerichteter Position in Richtung der Längsachsen zum Hauptteil hin bewegbar und am Hauptteil fixierbar ist.

Ein wesentlicher Vorteil des erfindungsgemäßen Steckverbinders besteht darin, daß bei der Herstellung des Steckverbinders zwei wesentliche Bestandteile des Steckverbindergehäuses (Produktgehäuse) - nämlich das Hauptteil und das Frontteil - quasi als Vorrichtung fungieren. Damit entfällt das beim eingangs genannten Stand der Technik notwendige Umsetzen des vorkonfektionierten Kabelendes in das Steckverbinder-Gehäuse. Nach Fixierung des Frontteiles am Hauptteil liegt bereits ein so weit vormontierter Steckverbinder vor, daß die empfindlichen optischen Fasern gegen äußere Belastungen weitgehend geschützt sind.

Eine fertigungstechnisch bevorzugte Ausgestaltung des erfindungsgemäßen Steckverbinders sieht vor, daß das Frontteil mit dem Hauptteil über einen gemeinsamen Gehäusedeckel verbunden ist. Bevorzugt kann der Gehäusedeckel über Rastarme mit dem Frontteil und dem Hauptteil verbunden sein; eine derartige Verbindung ist nicht nur einfach herstellbar, sondern kann bedarfsweise auch leicht gelöst werden.

Erfindungsgemäß besteht eine Weiterbildung des aus der EP-A1-0 375 168 bekannten Verfahrens zum Herstellen eines optischen Steckverbinders, bei dem ein Kabelende mit zwei optischen Fasern in einem Hauptteil eines Gehäuses festgelegt wird, bei dem zwei Kopplungs-Endstücke mit je einer Axialbohrung in einem Frontbereich des Gehäuses gelagert werden und bei dem in die Axialbohrungen jeweils ein Faserende eingeführt wird, darin, daß der Frontbereich als separates Frontteil ausgebildet wird, daß die optischen Fasern in dem Hauptteil derart angeordnet werden, daß die Faserenden frontteilseitig überstehen und achsparallel in einem dem Abstand der Axialbohrungen entsprechenden Abstand verlaufen, daß das Frontteil senkrecht zu den Längsachsen relativ zu dem Hauptteil so verschoben und positioniert wird, daß die Axialbohrungen mit den Längsachsen fluchten, und daß das Frontteil in ausgerichteter Position in Richtung der Längsachsen zum Hauptteil hin bewegt wird, wodurch die Faserenden in die Axialbohrungen eindringen, und daß das Frontteil am Hauptteil fixiert wird. Das erfindungsgemäße Verfahren bietet den Vorteil, daß die Faserenden frei von Biege-, Torsions- und/oder Scher-Beanspruchungen in die Axialbohrung einführbar sind, ohne daß eine zusätzliche Vorrichtung erforderlich ist.

Eine vorteilhafte Weiterbildung des erfindungsgemäßen Verfahrens besteht darin, daß die optischen Fasern in dem Hauptteil in frontteilseitigen Ausnehmungen durch Federkräfte fixiert werden. Das Faserende ist so besonders einfach und ohne zusätzliche Klebung fixiert; bevorzugt kann eine gebogene Kunststoffeder in dem Hauptteil die Federkräfte erzeugen. Die Kunststoffeder kann nach der Fixierung des Frontteils bedarfsweise wieder entfernt werden.

Ein Ausführungsbeispiel der Erfindung wird nachfolgend anhand einer Zeichnung näher erläutert; es zeigen:
Figur 1 Hauptbestandteile eines erfindungsgemäßen Steckverbinders während der Montage und
Figur 2 einen montierten, teilweise geschnittenen Steckverbinder.

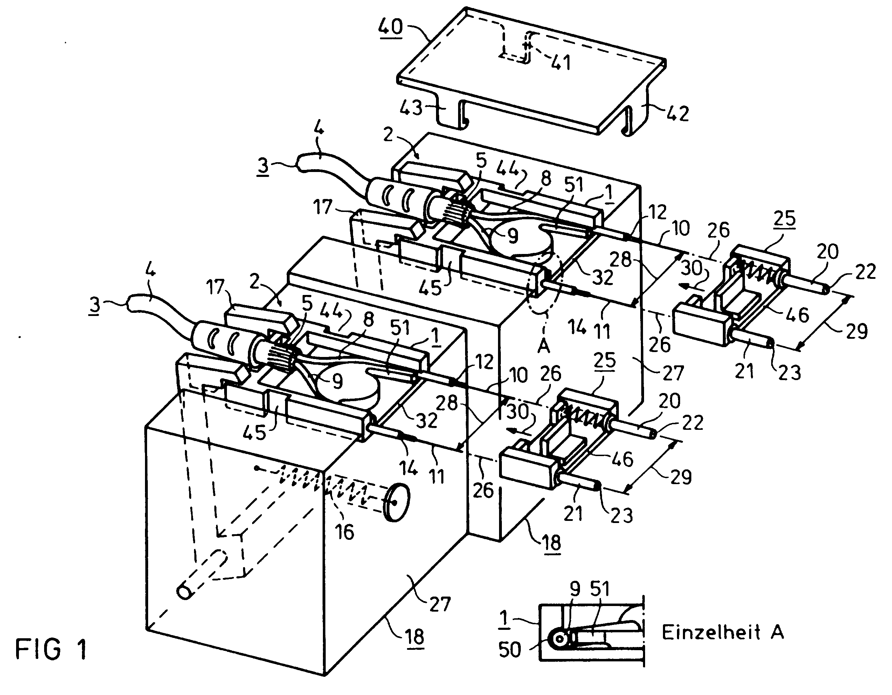

Figur 1 zeigt die gleichzeitige Montage von zwei Steckverbindern mit jeweils einem Hauptteil 1, in dessen rückwärtigen Bereich 2 ein Kabelende 3 eintritt, das in seinem Kabelmantel 4 (nur andeutungsweise dargestellte) Zugentlastungsfasern 5 und zwei optische Fasern 8, 9 enthält (Duplex-Steckverbinder). Die Fasern 8, 9 sind im Bereich ihrer Faserenden 10, 11 zumindest teilweise von einer Schutzumhüllung 12, 14 befreit. Eine von einer Feder 16 vorgespannte Halteklinke 17 fixiert das Hauptteil 1 während der Montage auf einem Montageblock 18.

Kopplungs-Endstücke 20, 21 mit jeweils einer Axialbohrung 22, 23 sind in einem separatem Frontteil 25 axial gefedert gelagert. Das Frontteil 25 ist in einer zur Längsachse 26 der Faserenden 10,11 im wesentlichen senkrechten Ebene 27 relativ zu dem Hauptteil 1 verschiebbar. Die Fasern 8, 9 sind in dem Hauptteil 1 an der dem Frontteil 25 zugewandten Seite (frontteilseitig) derart angeordnet, daß die Faserenden 10, 11 frontteilseitig überstehen und achsparallel verlaufen. Der Abstand 28 ihrer parallelen Längsachsen 26 entspricht im wesentlichen dem Abstand 29 der Axialbohrungen 22, 23 der Kopplungs-Endstücke 20, 21 in dem Frontteil 25.

Zur Montage des erfindungsgemäßen Steckverbinders wird das Frontteil 25 in der Ebene 27 in eine derartige Position verschoben, daß die Axialbohrungen 22, 23 fluchtend zur jeweiligen Längsachse 26 bzw. den Faserenden 10, 11 ausgerichtet sind. In der ausgerichteten Position wird das Frontteil 25 dann in Richtung 30 der Längsachse 26 zum Hauptteil 1 hinbewegt, wobei die Faserenden 10, 11 in die Axialbohrungen 22, 23 eindringen. Um die Faserenden in den Axialbohrungen zu fixieren, kann der faserendseitige Axialbohrungsbereich zuvor mit aushärtbarem Epoxydharz versehen werden. Nach ihrem Einbringen in die Axialbohrungen 22, 23 werden die Faserenden 10, 11 dort durch Aushärten des Epoxydharzes fixiert. Die fixierten Faserenden stehen über die Stirnflächen der Kopplungs-Endstücke 20, 21 geringfügig hervor und erhalten durch anschließende Bearbeitung (Polieren) die für eine gute optische Kopplung ausreichende optische Qualität. Das Hauptteil 1 und das Frontteil 25 können an einer Verbindungsebene 32 beispielsweise durch Kleben oder Schweißen verbunden werden. Die Verbindung kann zusätzlich oder ausschließlich durch einen gemeinsamen Deckel 40 bewirkt werden, der mit federnden Rastarmen 41, 42, 43 an dafür vorgesehenen Verriegelungspositionen 44, 45, 46 verrastet.

Wie die Detaildarstellung A in Figur 1 zeigt, sind die Fasern (gezeigt ist nur die Faser 9) bevorzugt in Ausnehmungen 50 des Hauptgehäuses 1 geführt und durch eine später entfernbare Kunststoffeder 51 in der Ausnehmung 50 fixiert.

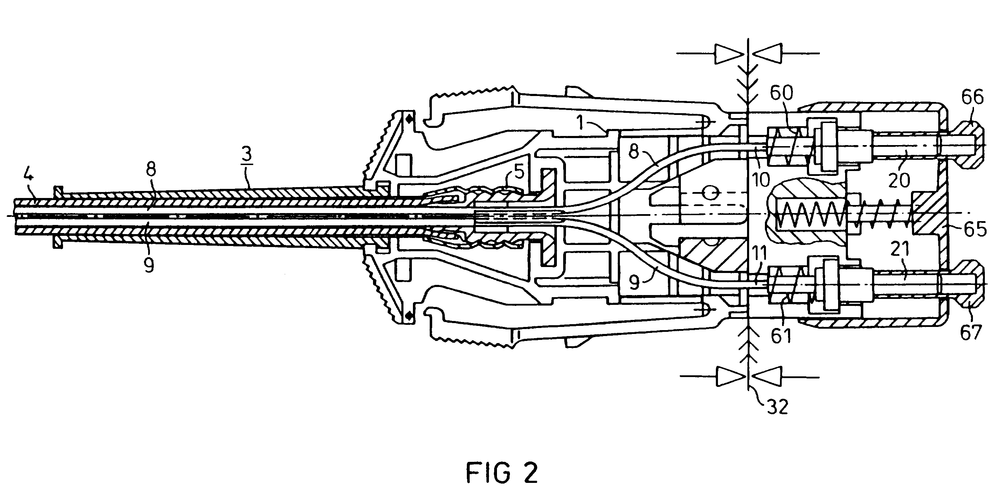

In Figur 2 ist das rückwärtig in das Hauptteil 1 eintretende Kabelende 3 mit den Fasern 8, 9, der durch Vercrimpen festgelegten Zugentlastungsfasern 5 und dem Kabelmantel 4 erkennbar. Die Faserenden 10, 11 sind in der zuvor beschriebenen Weise in die durch Federn 60, 61 axial federvorgespannten Kopplungs-Endstücke 20, 21 eingefügt, die von einer federbeaufschlagten Schutzkappe 65 und Schutzstiften 66, 67 geschützt sind.

Bei dem erfindungsgemäßen Steckverbinder dient das einen Teil des Gesamtgehäuses bildende Frontteil 25 quasi als Montagevorrichtung zur Aufnahme und Ausrichtung der Kopplungs-Endstücke 20, 21. Durch die zuvor sichergestellte axiale Flucht der Axialbohrungen 22, 23 mit den Längsachsen 26 können die Faserenden 10, 11 frei von Torsions-, Radial- oder Scherkräften eingeführt werden. Die Positionierung des Frontteils 25 kann auch mittels eines (nicht dargestellten) Mikromanipulators erfolgen. Zur Vereinfachung der fluchtenden Ausrichtung zwischen den Faserenden 10, 11 und den Axialbohrungen 22, 23 können die Fasern 8, 9 an ihren anderen Enden lichtbeaufschlagt und der Lichtaustritt an den Faserenden 10, 11 ggf. durch ein Mikroskop beobachtet werden.

## Patentansprüche

1. Optischer Steckverbinder mit einem Gehäuse mit einem Hauptteil (1), in dem ein zwei optische Fasern (8,9) enthaltendes Kabelende (3) festgelegt ist, und mit einem Frontbereich, in dem zwei Kopplungs-Endstücke (20,21) mit je einer Axialbohrung (22,23) zur Aufnahme jeweils eines Faserendes (10,11) gelagert sind,
**dadurch gekennzeichnet**,
daß der Frontbereich als separates Frontteil (25) ausgebildet ist,
daß das Hauptteil (1) Führungsmittel (50) aufweist, durch die die optischen Fasern (8,9) in dem Hauptteil (1) derart angeordnet sind, daß die Faserenden (10,11) frontteilseitig überstehen und achsparallel in einem dem Abstand (29) der Axialbohrungen (22,23) entsprechenden Abstand (28) verlaufen,
daß das Frontteil (25) senkrecht zu den Längsachsen (26) der Faserenden (10,11) relativ zu dem Hauptteil (1) derart verschiebbar und positionierbar ist, daß die Axialbohrungen (22,23) mit den Längsachsen (26) fluchten, und
daß das Frontteil (25) in ausgerichteter Position in Richtung (30) der Längsachsen (26) zum Hauptteil (1) hin bewegbar und am Hauptteil (1) fixierbar ist.

2. Steckverbinder nach Anspruch 1,
**dadurch gekennzeichnet**,
daß das Frontteil (25) mit dem Hauptteil (1) über einen gemeinsamen Gehäusedeckel (40) verbunden ist.

3. Steckverbinder nach Anspruch 2,.
**dadurch gekennzeichnet**,
daß der Gehäusedeckel (40) über Rastarme (41,42,43) mit dem Frontteil (25) und dem Hauptteil (1) verbunden ist.

4. Verfahren zum Herstellen eines optischen Steckverbinders,
bei dem ein Kabelende (3) mit zwei optischen Fasern (8,9) in einem Hauptteil (1) eines Gehäuses festgelegt wird,
bei dem zwei Kopplungs-Endstücke (20,21) mit je einer Axialbohrung (22,23) in einem Frontbereich des Gehäuses gelagert werden und
bei dem in die Axialbohrungen (22,23) jeweils ein Faserende (10,11) eingeführt wird,
**dadurch gekennzeichnet**,
daß der Frontbereich als separates Frontteil (25) ausgebildet wird,
daß die optischen Fasern (8,9) in dem Hauptteil (1) derart angeordnet werden, daß die Faserenden (10,11) frontteilseitig überstehen und achsparallel in einem dem Abstand (29) der Axialbohrungen (22,23) entsprechenden Abstand (28) verlaufen,
daß das Frontteil (25) senkrecht zu den Längsachsen (26) der Faserenden (10,11) relativ zu dem Hauptteil (1) so verschoben und positioniert wird, daß die Axialbohrungen (22,23) mit den Längsachsen (26) fluchten, und
daß das Frontteil (25) in ausgerichteter Position in Richtung (30) der Längsachsen (26) zum Hauptteil (1) hin bewegt wird, wodurch die Faserenden (10,11) in die Axialbohrungen (22,23) eindringen, und daß das Frontteil (25) am Hauptteil (1) fixiert wird.

5. Verfahren nach Anspruch 4,
**dadurch gekennzeichnet**,
daß die optischen Fasern (8,9) in dem Hauptteil (1) in frontteilseitigen Ausnehmungen (50) durch Federkräfte fixiert werden.

## Claims

1. Optical connector having a housing with a main part (1) in which a cable end (3) containing two optical fibres (8, 9) is fixed, and having a front region in which two coupling end pieces (20, 21) are mounted which each have an axial bore (22, 23) for receiving a fibre end (10, 11) in each case, characterized in that the front region is constructed as a separate front part (25), in that the main part (1) has guiding means (50) by means of which the optical fibres (8, 9) are arranged in the main part (1) in such a way that the fibre ends (10, 11) project on the front part side and extend in an axially parallel fashion at a spacing (28) corresponding to the spacing (29) of the axial bores (22, 23), in that the front part (25) can be displaced and positioned perpendicular to the longitudinal axes (26) of the fibre ends (10, 11) and relative to the main part (1) in such a way that the axial bores (22, 23) are aligned with the longitudinal axes (26), and in that in the aligned position the front part (25) can be moved in the direction (30) of the longitudinal axes (26) towards the main part (1) and can be fixed on the main part (1).

2. Connector according to Claim 1, characterized in that the front part (25) is connected to the main part (1) via a common housing cover (40).

3. Connector according to Claim 2, characterized in that the housing cover (40) is connected to the front part (25) and the main part (1) via latching arms (41, 42, 43).

4. Method for producing an optical connector, in which a cable end (3) with two optical fibres (8, 9) is fixed in a main part (1) of a housing, in which two coupling end pieces (20, 21) each having an axial bore (22, 23) are mounted in a front region of the housing, and in which a fibre end (10, 11) is respectively inserted into the axial bores (22, 23), characterized in that the front region is constructed as separate front part (25), in that the optical fibres (8, 9) are arranged in the main part (1) in such a way that the fibre ends (10, 11) project on the front part side and extend in an axially parallel fashion at a spacing (28) corresponding to the spacing (29) of the axial bores (22, 23), in that the front part (25) is displaced and positioned perpendicular to the longitudinal axes (26) of the fibre ends (10, 11) and relative to the main part (1) in such a way that the axial bores (22, 23) are aligned with the longitudinal axes (26), and in that in the aligned position the front part (25) is moved in the direction (30) of the longitudinal axes (26) towards the main part (1), as a result of which the fibre ends (10, 11) penetrate into the axial bores (22, 23), and in that the front part (25) is fixed on the main part (1).

5. Method according to Claim 4, characterized in that the optical fibres (8, 9) are fixed in the main part (1) in recesses (50) on the front part side by means of spring forces.

## Revendications

1. Connecteur optique à fiche, comportant un boîtier ayant une pièce (1) principale, dans laquelle est fixée une extrémité (3) de câble, comprenant deux fibres (8, 9) optiques, et une région frontale, dans laquelle sont montés deux embouts (20, 21) de couplage comportant chacun un trou (22, 23) axial de réception d'une extrémité (10, 11) de fibre,
caractérisé en ce que la région frontale revêt la forme d'une pièce (25) frontale distincte, en ce que la pièce (1) principale comporte des moyens (50) de guidage, par lesquels les fibres (8, 9) optiques sont disposées dans la partie (1) principale, de sorte que les extrémités (10, 11) de fibres dépassent du côté de la pièce frontale et s'étendent parallèlement à l'axe à une distance l'une de l'autre correspondant à la distance entre les trous (22, 23) axiaux, en ce que la pièce (25) frontale peut être positionnée et coulisser par rapport à la partie (1) principale, perpendiculairement aux axes (26) longitudinaux des extrémités (10, 11) de fibres, de manière que les trous (22, 23) axiaux affleurent les axes (26) longitudinaux, et en ce que la pièce (25) frontale est mobile en position alignée suivant la direction (30) des axes (26) longitudinaux par rapport à la partie (1) principale et peut être immobilisée sur cette pièce (1) principale.

2. Connecteur à fiche suivant la revendication 1, caractérisé en ce que la partie (25) frontale est reliée à la pièce (1) principale par un couvercle (40) de boîtier commun.

3. Connecteur à fiche suivant la revendication 2, caractérisé en ce que le couvercle (40) de boîtier est relié à la pièce (25) frontale et à la pièce (1) principale par l'intermédiaire de bras (41, 42, 43) d'encliquetage.

4. Procédé de fabrication d'un connecteur optique à fiche, dans lequel on fixe une extrémité (3) de câble ayant deux fibres (8, 9) optiques dans une pièce (1) principale d'un boîtier, on monte deux embouts (20, 21) de couplage ayant chacun un trou (22, 23) axial dans une région frontale du boîtier et on introduit respectivement une extrémité (10, 11) de fibre dans les trous (22, 23) axiaux,
caractérisé en ce que
on forme la région frontale en tant que pièce (25) frontale distincte,
en ce que on dispose les fibres (8, 9) dans la partie (1) principale de manière que les extrémités (10, 11) de fibres dépassent du côté de la pièce frontale et s'étendent parallèlement à l'axe à une distance (28) l'une de l'autre égale à la distance (29) entre les trous (22, 23) axiaux, en ce que la pièce (25) frontale est déplacée par coulissement par rapport à la pièce (1) principale, perpendiculairement aux axes (26) longitudinaux des extrémités (10, 11) de fibres, de manière que les trous (22, 23) axiaux affleurent les axes (26) longitudinaux et
en ce que on déplace la pièce (25) frontale vers la pièce (1) principale en position alignée suivant la direction (30) des axes (26) longitudinaux, les extrémités (10, 11) de fibres pénètrant ainsi dans les trous (22, 23) axiaux, et en ce que on fixe la pièce (25) frontale à la partie (1) supérieure.

5. Procédé suivant la revendication 4,
caractérisé en ce que les fibres (8, 9) optiques dans la pièce (1) principale sont immobilisées dans des évidements (50) du côté de la pièce frontale par des forces élastiques.
